# EUROPÄISCHE PATENTSCHRIFT

(11) **EP 1 705 221 B1**
(45) Veröffentlichungstag und Bekanntmachung des Hinweises auf die Patenterteilung: **25.11.2009**
(21) Anmeldenummer: 06005453.3
(22) Anmeldetag: 17.03.2006
(51) Int. Cl.: C08K 5/5313, C08K 3/00

(54) **Verwendung von Stabilisatoren in Phoshorhaltigen thermostabilisierten Flammschutzmittelagglomeraten**
Use of stabilizers in phosphorous containing heat stabilized fire retardant agglomerates
Utilisation de stabilisateurs pour l'agents d'ignifugation agglomérés thermostabilisés contenant du phosphore

(30) Priorität: 26.03.2005 DE 102005013958
(43) Veröffentlichungstag der Anmeldung: 27.09.2006
(73) Patentinhaber: Clariant Produkte (Deutschland) GmbH, 65929 Frankfurt am Main (DE)
(72) Erfinder: Bauer, Harald, Dr., 50170 Kerpen (DE); Hörold, Sebastian, Dr., 86420 Diedorf (DE); Krause, Werner, Dr., 50354 Hürth (DE)
(74) Vertreter: Mikulecky, Klaus

(56) Entgegenhaltungen:
- EP-A- 1 024 167
- EP-A- 1 396 522
- EP-A- 1 522 551
- EP-A- 1 602 685
- EP-A- 1 607 400
- WO-A-2004/046235

## Beschreibung

Die Erfindung bezieht sich auf die Verwendung von Stabilisatoren in phosphorhaltigen thermostabilisierten Flammschutzmittelagglomeraten zur Stabilisierung gegen deren Verfärbung beim Erhitzen. Besagte phosphorhaltige thermostabilisierte Flammschutzmittelagglomerate enthalten Aggregate und/oder Primärteilchen aus Phosphinsäuresalzen und/oder Diphosphinsäuresalzen und/oder deren Polymeren und haften mit Hilfe eines Bindemittels zusammen. Die Erfindung betrifft auch ein Verfahren zur Herstellung dieser phosphorhaltigen thermostabilisierten Flammschutzmittelagglomerate und die Verwendung derselben als Flammschutzmittel in Polymeren.

Nach dem Stand der Technik (DE-A-1 03 47 012) gelingt es, phosphorhaltige Flammschutzmittel durch Sprühagglomeration herzustellen. Es werden dabei Bindemittel eingesetzt, die das Agglomerat mechanisch stabilisieren sollen.

Die im Stand der Technik beschriebenen Agglomerate sind nachteilig, da sie sich beim Erhitzen verfärben. Da ein derartiges Erhitzen bei der bestimmungsgemäßen Verarbeitung der Agglomerate zu flammgeschützten Formmassen bzw. flammgeschützten Formkörpern erfolgt, ergeben sich ebenfalls nachteilige Verfärbungen bei diesen Produkten.

Es ist Aufgabe der vorliegenden Erfindung, phosphorhaltige thermostabilisierte Flammschutzmittelagglomerate zur Verfügung zu stellen, die Bindemittel enthalten und gegen Verfärbung beim Erhitzen wesentlich beständiger sind.

Gelöst wird diese Aufgabe durch die Verwendung von Stabilisatoren in den phosphorhaltigen thermostabilisierten Flammschutzmittelagglomeraten gemäß Anspruch 1.

Überraschend wurde gefunden, dass durch Wahl des geeigneten Stabilisators die sonst übliche Verfärbung beim Erhitzen der phosphorhaltigen thermostabilisierten Flammschutzmittelagglomerate weitgehend verhindert werden kann.

Gegenstand der Erfindung ist daher die Verwendung von Stabilisatoren in phosphorhaltigen thermostabilisierten Flammschutzmittelagglomeraten gemäß Anspruch 1.

Bevorzugt handelt es sich bei den Stabilisatoren um Verbindungen der Elemente der zweiten Haupt- und Nebengruppe und der dritten Hauptgruppe des Periodensystems.

Bevorzugt handelt es sich bei den Stabilisatoren um Verbindungen der Elemente Bor, Calcium, Magnesium und/oder Zink.

Bevorzugt handelt es sich bei den Stabilisatoren um Borphosphat.

Bevorzugt handelt es sich bei den Stabilisatoren um Calciumborat, Calciumpyroborat, Calciumcarbonat, Calciumhydroxid, Calciumphosphate, Calciumhydrogenphosphate und/oder Calciumpyrophosphat.

Bevorzugt handelt es sich bei den Stabilisatoren um Magnesiumoxid, Magnesiumhydroxid, Magnesiumoxidhydroxide, Hydrotalcite, Dihydrotalcit, Magnesium-Carbonate, Magnesiumhydroxidcarbonate, Magnesium-Calcium-Carbonate, Magnesiumphosphate, Magnesiumhydrogenphosphate Magnesiumpyrophosphat und/oder Magnesiumborat.

Bevorzugt handelt es sich bei den Stabilisatoren um Zinkoxid, Zinkhydroxid, Zinkoxidhydrat; um Zinkcarbonate, Zinkhydroxidcarbonat, Zink-carbonathydrat, Zinksilicat, Zinkhexafluorosilicat, Zinkhexafluorosilicat hexahydrat, Zinkstannat, Zink-Magnesium-Aluminium-Hydroxid-Carbonat; um Zinkborat, Zinkphosphat, Zinkhydrogenphosphat, Zinkpyrophosphat; um Zinkchromat(V1)-hydroxyd, Zinkchromit, Zinkmolybdat, Zinkpermanganat, Zinkmolybdat-Magnesiumsilicat; um Zinkformiate, Zinkacetate, Zinktrifluoracetate, Zinkpropionat, Zinkbutyrat, Zinkvalerat, Zinkcaprylat, Zinkoleat, Zinkstearat, Zinkoxalat, Zinktartrat, Zinkcitrat, Zinknenzoat, Zinksalicylat, Zinklactat, Zinkphenolat, Zinkphenolsulfonat, Zinkacetylacetonat, Zinktannat, Zinkdimethyldithiocarbamat, Zinktrifluormethansulfonat; und um Zinkphosphide, Zinksulfide, Zinkselenide und Zinktelluride.

Besonders bevorzugt handelt es sich bei den Stabilisatoren um Borphosphat, Calciumpyrophosphat, Magnesiumpyrophosphat, Magnesiumborat, Zinkoxid, Zinkhydroxid, Zinkborat, Zinkstearat und/oder Zinkpyrophosphat.

Es handelt sich bei den phosphorhaltigen thermostabilisierten Flammschutzmittelagglomeraten um Zusammensetzungen, die
a) 60 bis 99,89 Gew.-% Aggregate und/oder Primärteilchen von einem Phosphinsäuresalz der Formel (I) und/oder von einem Diphosphinsäuresalz der Formel (II) und/oder von deren Polymeren, 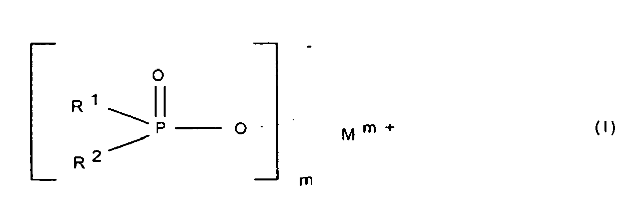 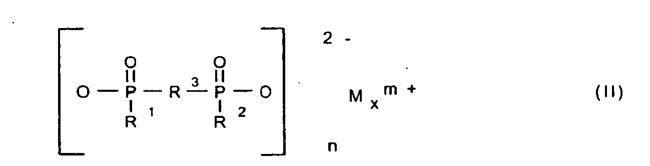 worin
   - R¹, R²: gleich oder verschieden sind und C1-C6-Alkyl, linear oder verzweigt und/oder Aryl;
   - R³: C₁-C₁₀-Alkylen, linear oder verzweigt, C₆-C₁₀-Arylen, -Alkylarylen oder -Arylalkylen;
   - M: Mg, Ca, Al, Zn, Sb, Sn, Ge, Zn, Ti, Fe, Zr, Ce, Bi, Sr, Mn, Li, Na, K und/oder eine protonierte Stickstoffbase;
   - m: 1 bis 4; n 1 bis 4; x 1 bis 4 bedeuten und
b) 0,01 bis 20 Gew.-% Bindemittel
c) 0,1 bis 20 Gew.-% Stabilisator der Ansprüche 3 bis 8 enthalten.

Besonders bevorzugt handelt es sich bei den phosphorhaltigen thermostabilisierten Flammschutzmittelagglomeraten um Zusammensetzungen, die
a) 60 bis 99,89 Gew.-% Aggregate und/oder Primärteilchen von einem Phosphinsäuresalz der Formel (I) und/oder von einem Diphosphinsäuresalz der Formel (II) und/oder von deren Polymeren und mindestens einem Synergisten und
b) 0,01 bis 20 Gew.-% Bindemittel
c) 0,1 bis 20% Stabilisator enthalten.

Bevorzugt betragen die L-Farbwerte der phosphorhaltigen thermostabilisierten Flammschutzmittelagglomerate nach Wärmebehandlung von 81 bis 99,9, besonders bevorzugt von 85 bis 98.

Bevorzugt betragen die a-Farbwerte der phosphorhaltigen thermostabilisierten Flammschutzmittelagglomerate von -2 bis +2, besonders bevorzugt -1 bis +1,5.

Bevorzugt betragen die b-Farbwerte der phosphorhaltigen thermostabilisierten Flammschutzmittelagglomerate von -2 bis +8, bevorzugt -1 bis +7.

Bei der erfindungsgemäßen Verwendung enthalten die phosphorhaltigen thermostabilisierten Flammschutzmittelagglomerate weiterhin mindestens einen Synergisten, wobei es sich bei dem Synergisten um einen solchen handelt, der eine Stickstoff-, Phosphor- oder Phosphorstickstoffverbindung enthält.

Bevorzugt handelt es sich bei dem Synergisten um Melaminpyrophosphat, Melaminpolyphosphat, Melampolyphosphat, Melempolyphosphat, Melonpolyphosphat, Melamincyanurat, Melamin, Melam, Melem und/oder Melon.

Bevorzugt handelt es sich bei dem Bindemittel um Homopolymere oder gemischte Polymere basierend auf mindestens einem Monomer aus der Gruppe 1,2-Butadien, 1,3-Butadien, 2-Ethylhexylacrylat, abgebaute Stärke, Acrolein, Acrylamid, Acrylamidomethylpropanphosphonsäure, Hydroxyethyl(meth)acrylatsulfate, Acrylamidomethylpropansulfonsäure, Acrylester, Acrylnitril, Acrylsäure, Aldehydstärken, Alkylcellulose, Alkylhydroxyethylcellulose und Alkyl ist bevorzugt Methyl-, Allylalkoholphosphate, Allylalkoholsulfate, Allylessigsäure, Allylphosphonsäure, Amide, Asparaginsäure, Caprolactam, Carboxyalkylcellulose (Na-Salz), Crotonsäure, Di- oder Oligosaccharide, Dibutylmaleat, Dimethylacrylsäure, Epoxide, Ester, Ethylacrylat, Ethylacrylsäure, Ethylen, Ethylenglycol, Ethylhexylacrylat, Ethylmethacrylat, Fumarsäure, Hydroxyacrylsäure, Hydroxyethylcellulose, Hydroxypropylcellulose, lsobutylacrylat, Isobutylmethacrylat, Itaconsäure, Laurylacrylat, Maleinsäure, Maleinsäureanhydrid, Meth(allysulfonsäure), Methacrylamid, Methacrylat, Methacrylnitril, Methacrylsäure, Methallylsulfonsäure, Methylmethacrylat, Methylstyrol, Milchsäure, Mono-natriumcarboxymethylcellulose, n-Butylacrylat, n-Butylmethacrylat, n-Hexylacrylat, n-Hexylmethacrylat, N-hydroxymethylacrylamid, n-Propylacrylat, N-Vinylpyrrolidon, Olefine, Polyvinylbutyral, Polyvinylcaprolactam, Propylen, sec-Butylacrylat, Stearate, Styrol, Styrolsulfonsäure, tert-Butylacrylat, tert-Butylchlorid, tert-Butylmethacrylat, Urethane, Vinylacetat, Vinylalkoholderivate, Vinylcaprolactam, Vinylchlorid, Vinylessigsäure, Vinylester, Vinylethern, Vinylidenchlorid, Vinyllaurat, Vinylmethylethern, Vinylphosphonsäure, Vinylpropionat, Vinylpyrrolidon, Vinylsulfonsäure, Zuckercarbonsäure und/oder Mischungen davon.

Bevorzugt handelt es sich bei dem Bindemittel um Polyvinylacetat, Polyvinylalkohol, Polyvinylpyrrolidon, Polycarboxylat, Acrylsäure-Maleinsäure-Copolymer, Polystyrolsulfonsäure, Polystyrolsulfonsäure-Maleinsäureanhydrid-Copolymer, Wasserglas, Vinylacetat-Polymer, Polyacrylat/Polyacrylsäure, Polymilchsäure, Stärke und/oder Cellulosederivate.

Die Erfindung betrifft auch die Verwendung von stabilisatorhaltigen phosphorhaltigen Flammschutzmittelagglomeraten nach einem oder mehreren der Ansprüche 7 bis 9 in flammgeschützten Polymer-Formmassen und flammgeschützten PolymerFormkörpern, -Filme, -Fäden und -Fasern.

Bevorzugt enthält dabei die flammgeschützte Polymerformmasse
1 bis 50 Gew.-% phosphorhaltige thermostabilisierte Flammschutzmittelagglomerate nach einem oder mehreren der Ansprüche 8 bis 9,
1 bis 99 Gew.-% Polymer oder Mischungen derselben
0 bis 60 Gew.-% Additive
0 bis 60 Gew.-% Füllstoff und/oder Verstärkungsmaterialien.

Bevorzugt enthalten dabei die flammgeschützten Polymerformkörper, -Filme, -Fäden und -Fasern
1 bis 50 Gew.-% phosphorhaltige thermostabilisierte Flammschutzmittelagglomerate nach einem oder mehreren der Ansprüche 8 bis 9,
1 bis 99 Gew.-% Polymer oder Mischungen derselben
0 bis 60 Gew.-% Additive
0 bis 60 Gew.-% Füllstoff und / oder Verstärkungsmaterialien.

Unter dem Begriff phosphorhaltige thermostabilisierte Flammschutzmittelagglomerate werden erfindungsgemäß Teilchen einer phosphorhaltigen thermostabilisierten Flammmittel-Zusammensetzung verstanden, die aus Primärpartikeln und/oder Aggregaten eines Phosphinsäuresalzes der Formel (I) und/oder eines Diphosphinsäuresalz der Formel (II) und/oder deren Polymere bestehen, einen Stabilisator enthalten und die durch ein Bindemittel aneinander gebunden sind.

Bevorzugt enthalten die phosphorhaltigen thermostabilisierten Flammschutzmittelagglomerate auch
a) 98,9 bis 85 Gew.-% Aggregate und/oder Primärteilchen von einem Phosphinsäuresalz der Formel (I) und/oder von einem Diphosphinsäuresalz der Formel (II) und/oder von deren Polymeren und
b) 0,1 bis 5 Gew.-% Bindemittel und
c) 1 bis 10 Gew.-% Stabilisator.

Bevorzugt enthalten die zuletzt genannten phosphorhaltigen thermostabilisierten Flammschutzmittelagglomerate
a) 98,9 bis 85 Gew.-% Aggregate und/oder Primärteilchen von einem Phosphinsäuresalz der Formel (I) und/oder von einem Diphosphinsäuresalz der Formel (II) und/oder von deren Polymeren und mindestens einem Synergisten und
b) 0,1 bis 5 Gew.-% Bindemittel und
c) 1 bis 10 Gew.-% Stabilisator.

Bevorzugt beträgt die mittlere Teilchengröße der phosphorhaltigen thermostabilisierten Flammmittelagglomerate 0,1 bis 3.000 µm , bevorzugt 100 bis 3.000 µm und besonders bevorzugt 200 bis 2.000 µm. Geringere Teilchengrößen erfüllen nicht den Zweck der Staubfreiheit. Größere Teilchengrößen ergeben Produkte mit erhöhtem Abrieb und geringen Schüttgewichtes.

Bevorzugt beträgt die Schüttdichte der phosphorhaltigen thermostabilisierten Flammschutzmittelagglomerate 80 bis 1500 g/l, bevorzugt 80 bis 800 g/l, besonders bevorzugt 200 bis 600 g/l. Geringere Schüttdichten erschweren wegen des hohen Luftgehaltes die Einarbeitung in das Polymer mit dem Extruder zu flammgeschützten Polymerformmassen. Größere Schüttdichten sind durch Agglomerierung nicht oder nur schwer herzustellen.

Bevorzugt beträgt der Restfeuchtegehalt der eingesetzten Phosphinat- bzw. Synergisten-Aggregate 0,05 bis 30 Gew.-%, bevorzugt 0,1 bis 5 Gew.-%. Phosphinat- bzw. Synergisten-Aggregate mit höheren Restfeuchtegehalten sind nicht mehr handhabbar, da sie zum Verklumpen neigen. Phosphinat- bzw. Synergisten-Aggregate mit niedrigeren Restfeuchtegehalten sind technisch schwer herzustellen.

Bevorzugt beträgt der mittlere Teilchendurchmesser der eingesetzten Phosphinat- bzw. Synergisten-Aggregate 0,1 bis 500 µm, bevorzugt 1 bis 100 µm.

Phosphinat- bzw. Synergisten-Aggregate mit größerem mittlerem Teilchendurchmesser ergeben Inhomogenitäten in den flammgeschützten Polymerformkörpern. Phosphinat- bzw. Synergisten-Aggregate mit niedrigerem mittlerem Teilchendurchmesser sind technisch schwer herzustellen.

Die erfindungsgemäßen Phosphinat- bzw. Synergisten-Aggregate bestehen aus Phosphinat- bzw. Synergisten-Primärpartikeln

Bevorzugt beträgt der mittlere Teilchendurchmesser der Phosphinat- bzw. Synergisten-Primärpartikel 0,1 bis 50 µm, bevorzugt 1 bis 10 µm.

Die Farbwerte werden im System nach Hunter (CIE-LAB-System, Commission Internationale d'Eclairage) angegeben. L-Farbwerte gehen von 0 (schwarz) bis 100 (weiß), a-Farbwerte von -a (grün) bis +a (rot) und b-Farbwerte von -b (blau) bis +b (gelb).

Phosphorhaltige thermostabilisierte Flammschutzmittelagglomerate mit L-Farbwerten unterhalb des erfindungsgemäßen Bereiches (s. Beispiele) erfordern einen höheren Weißpigmenteinsatz. Diorganylphosphinsäure-Salze mit a- bzw. b-Farbwerten außerhalb des erfindungsgemäßen Bereiches erfordern einen höheren Weißpigmenteinsatz. Dieser verschlechtert die mechanischen Stabilitätseigenschaften des Polymerformkörpers (z.B. E-Modul, Kerbschlagzähigkeit, Reißdehnung und/oder Zugfestigkeit).

Bevorzugt beträgt der Abrieb der phosphorhaltigen thermostabilisierten Flammmittelagglomerate 30 - 95 %, besonders bevorzugt 40 - 80 %. Phosphorhaltige thermostabilisierte Flammmittelagglomerate mit höheren Abriebwerten erfüllen nicht das Erfordernis der Staubarmut, solche mit niedrigeren Abriebwerten ergeben Inhomogenitäten in den flammgeschützten Polymerformkörpern.

Bevorzugt beträgt der Restfeuchtegehalt der phosphorhaltigen thermostabilisierten Flammmittelagglomerate 0,05 - 2 Gew.-%, besonders bevorzugt 0,1 - 1 Gew.-%. Restfeuchten außerhalb des erfindungsgemäß bevorzugten Bereiches beeinträchtigt die Verträglichkeit mit Polymer. Dies bedeutet schlechtere Festigkeits- und Elastizitätseigenschaften der flammgeschützten Polymerformmassen und der flammgeschützten Polymerformkörper.

Unter dem Begriff phosphorhaltige thermostabilisierte Flammschutzmittelagglomerate werden erfindungsgemäß ebenfalls Teilchen einer phosphorhaltigen thermostabilisierten Flammmittel-Zusammensetzung verstanden, die aus Primärpartikein und/oder Aggregaten/ Primärteilchen eines Phosphinsäuresalzes der Formel (I) und/oder eines Diphosphinsäuresalz der Formel (II) und/oder deren Polymere und mindestens eines Synergisten bestehen und die durch ein Bindemittel aneinander gebunden sind.

Bevorzugt enthält die Komponente a) 10 bis 95 Gew.-% Phosphinsäuresalz der Formel (1) und/oder Diphosphinsäuresalz der Formel (11) und/oder deren Polymere und 95 bis 10 Gew.-% mindestens eines Synergisten.

Besonders bevorzugt enthält die Komponente a) 25 bis 75 Gew.-% Phosphinsäuresalz der Formel (1) und/oder Diphosphinsäuresalz der Formel (II) und/oder deren Polymere und 25 bis 75 Gew.-% mindestens eines Synergisten.

In einer bevorzugten Ausführungsform enthält die Komponente a)
10 bis 90 Gew.-% eines Zink- und/oder Aluminium- und/oder Titan- und/oder Zirkonium- und/oder Eisensalzes der Phosphinsäure der Formel (I) und/oder der Diphosphinsäure der Formel (II) und/oder deren Polymere und
10 bis 90 Gew.-% mindestens eines Synergisten, der aus mindestens einem Vertreter aus der Gruppe der
   b) Salze der Phosphorsäure mit Melamin und der aus diesen durch thermische Behandlung zugänglichen Materialien und/oder
   c) Salze der Phosphorsäure mit Kondensationsprodukten des Melamins und der aus diesen durch thermische Behandlung zugänglichen Materialien und/oder
   d) Salze der Phosphorsäure mit Hydrolyseprodukten des Melamins und der aus diesen durch thermische Behandlung zugänglichen Materialien und/oder
   e) Salze von Melamin mit den Kondensationsprodukte der Phosphorsäure und der aus diesen durch thermische Behandlung zugänglichen Materialien und/oder
   f) Salze von Kondensationsprodukten des Melamins mit Kondensationsprodukten der Phosphorsäure und der aus diesen durch thermische Behandlung zugänglichen Materialien und/oder
   g) Salze von Hydrolyseprodukten des Melamins mit Kondensationsprodukten der Phosphorsäure und der aus diesen durch thermische Behandlung zugänglichen Materialien besteht.

In einer weiteren Ausführungsform enthält die Komponente a) 30 bis 80 Gew.-% eines Zink- und/oder Aluminium- und/oder Titan- und/oder Zirkonium- und/oder Eisensalzes der Phosphinsäure der Formel (I) und/oder der Diphosphinsäure der Formel (II) und/oder deren Polymere und 20 bis 70 Gew.-% mindestens eines Synergisten, der aus mindestens einem Vertreter aus der Gruppe der
b) Salze der Phosphorsäure mit Melamin und der aus diesen durch thermische Behandlung zugänglichen Materialien und/oder
c) Salze der Phosphorsäure mit Kondensationsprodukten des Melamins und der aus diesen durch thermische Behandlung zugänglichen Materialien und/oder
d) Salze der Phosphorsäure mit Hydrolyseprodukten des Melamins und der aus diesen durch thermische Behandlung zugänglichen Materialien und/oder
e) Salze von Melamin mit den Kondensationsprodukte der Phosphorsäure und der aus diesen durch thermische Behandlung zugänglichen Materialien und/oder
f) Salze von Kondensationsprodukten des Melamins mit Kondensationsprodukten der Phosphorsäure und der aus diesen durch thermische Behandlung zugänglichen Materialien und/oder
g) Salze von Hydrolyseprodukten des Melamins mit Kondensationsprodukten der Phosphorsäure und der aus diesen durch thermische Behandlung zugänglichen Materialien besteht und
1 bis 50 Gew.-% mindestens eines Stabilisators (insbesondere Borphosphat, Calciumpyrophosphat, Magnesiumpyrophosphat, Magnesiumborat, Zinkoxid, Zinkhydroxid, Zinkborat, Zinkstearat und/oder Zinkpyrophosphat).

Bevorzugt bedeutet M in den Formeln (I) und (II) Calcium, Aluminium, Titan oder Zink.

Unter protonierten Stickstoffbasen werden bevorzugt die protonierten Basen von Ammoniak, Melamin, Triethanolamin, insbesondere NH⁴⁺, verstanden.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethylnaphthylen oder tert.-Butylnaphthylen; Phenyl-methylen, Phenyl-ethylen, Phenylpropylen oder Phenyl-butylen.

### Synergisten

Bevorzugt handelt es sich bei dem Synergisten um einen solchen, der eine Stickstoff-, Phosphor- oder Phosphorstickstoffverbindung enthält.

Geeignete Synergisten sind Melaminphosphat (z.B. ®Melapur MPH, ®Melapur MP der Fa. Ciba-DSM Melapur), Melaminacetat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat (z.B. ®Budit 311 der Fa. Budenheim, ®MPP-B der Fa. Sanwa Chemicals), Melaminpolyphosphate, Melampolyphosphate, Melempolyphosphate und/oder Melonpolyphosphate bevorzugt. Besonders bevorzugt sind Melaminpolyphosphate wie ®Melapur 200/70, ®Melapur CGX FR231 der Fa. Ciba-DSM Melapur, ®Budit 3141, 3141 CA und 3141 CB und Melaminpolyphosphat/ Melaminpyrophosphat der Typen 13-1100, 13-1105, 13-1115, MPP02-244 der Fa. Hummel-Croton und PMP-100(R) bzw. PMP-200 der Fa. Nissan Chemical Industries, Japan. Ebenfalls geeignet: ®Melapur MC 25, ®Melapur MC oder ®Melapur MC XL der Fa. Ciba-DSM Melapur und Melamin-Ammonium-Polyphosphate.

In einer weiteren Ausführungsform sind als erfindungsgemäße Melaminpolyphosphate Kondensationsprodukte des Melamins oder Umsetzungsprodukte des Melamins mit Phosphorsäure bzw. Umsetzungsprodukte von Kondensationsprodukten des Melamins mit Phosphorsäure sowie Gemische der genannten Produkte bevorzugt. Kondensationsprodukte des Melamins sind z. B. Melem, Melam oder Melon bzw. höher kondensierte Verbindungen dieses Typs sowie Gemische derselben.

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen.

Beispiele hierfür sind Melaminpolyphosphat, Melampolyphosphat (PMP-200^{™} von Fa. Nissan Chemical Industries) und Melempolyphosphat Melempolyphosphat (PMP-300^{™} von Fa. Nissan Chemical Industries) bzw. gemischte Polysalze. Die genannten Verbindungen sind bereits aus der Literatur bekannt und können auch durch andere Verfahren als die direkte Umsetzung mit Phosphorsäure hergestellt werden. Melaminpolyphosphat kann zum Beispiel durch die Umsetzung von Polyphosphorsäure und Melamin bzw. durch die Kondensation von Melaminphosphat bzw. Melaminpyrophosphat hergestellt werden.

In einer weiteren Ausführungsform sind als erfindungsgemäße Melaminpolyphosphate solche Produkte bevorzugt, die durch thermische Nachbehandlung von Umsetzungsprodukten von Melamin und/oder von Kondensationsprodukten des Melamins mit Phosphorsäure erhalten werden.

Erfindungsgemäß sind als Synergisten weiterhin bevorzugt oligomere Ester des Tris(hydroxyethyl)isocyanurats mit aromatischen Polycarbonsäuren, Benzoguanamin, Tris(hydroxyethyl)isocyanurat, Melaminkondensationsprodukte wie Melam, Melem und/oder Melon, Melamincyanurat (z.B. ®Melapur MC oder ®Melapur MC XL der Fa. Ciba-DSM Melapur), Dicyandiamid und/oder Guanidin.

Erfindungsgemäß sind als Synergisten weiterhin bevorzugt stickstoffhaltige Phosphate der Formeln (NH₄)yH₃-yPO₄ bzw. (NH₄PO₃)z, mit y gleich 1 bis 3 und z gleich 1 bis 10.000.

Erfindungsgemäß sind als Synergisten Stickstoffverbindungen wie Allantoin, Melamin, Cyanursäure, Glycoluril, Harnstoff und ihre Derivate bevorzugt, z.B. solche der Formeln (III) bis (VIII) oder Gemische davon 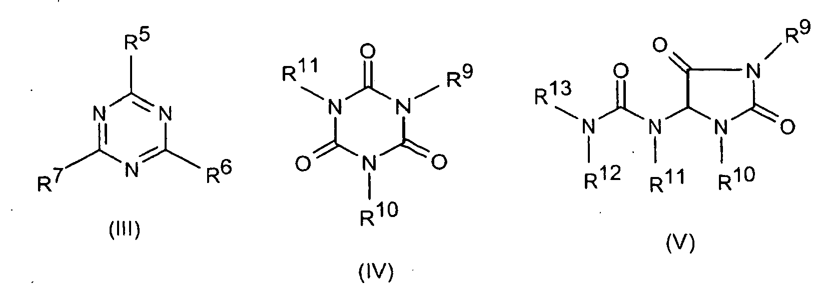 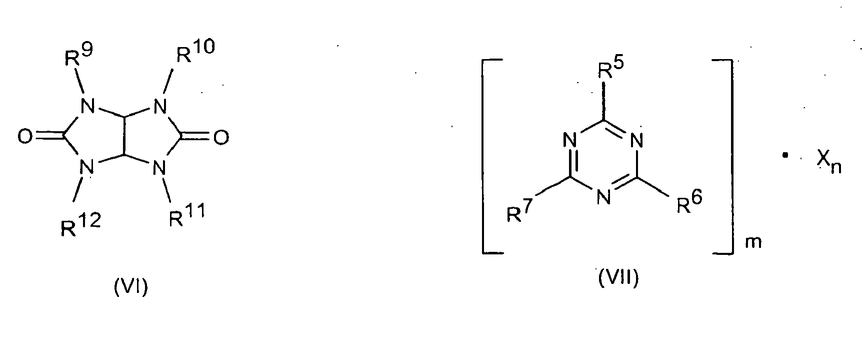 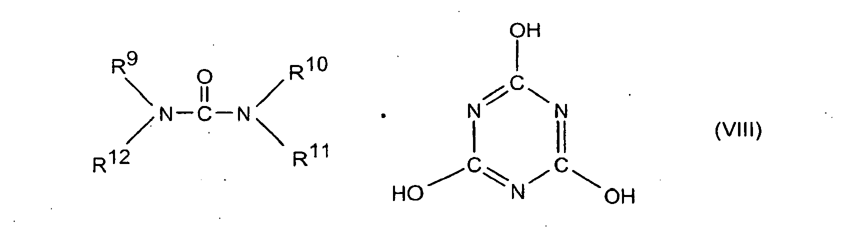 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl- Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl- Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten.

Bevorzugte Synergisten sind Verbindungen der Elemente der dritten Hauptgruppe, besonders bevorzugt des Aluminiums.

Bevorzugte Synergisten sind Aluminiumverbindungen, z.B. Aluminiumoxid, Aluminiumoxidhydroxid (Böhmit, Diaspor), Aluminiumhydroxid (Bayerit, Gibbsit, Hydrargillit) oder Aluminiumphosphat.

Bevorzugte Synergisten sind Zinnverbindungen, z.B. Zinnoxid, Zinnoxidhydrate, Zinn (II)hydroxid, Zinnsulfid.

Bevorzugte Synergisten sind auch Carbodiimide (z.B. ®Stabaxol 1, ®Stabaxol P, Stabaxol KE 9193 der Fa. Rhein Chemie) N,N'-Dicyclohexylcarbodümid und/oder Polyisocyanate (z.B. ®Basonat HI 100 oder ®Vestanat T 1890/100), Carbonylbiscaprolactam (Fa Allinco) oder Styrol-Acryl-Polymere (®Joncryl ADR-4357 der Fa. Johnson); sterisch gehinderten Phenole (z.B. Hostanox OSP 1), sterisch gehinderte Amine und Lichtstabilisatoren (z.B. Chimasorb 944, Hostavin-Typen), Phosphonite und Antioxidantien (z.B. Sandostab® P-EPQ der Fa. Clariant) und Trennmittel (®Licomont-Typen der Fa. Clariant).

Bevorzugte Stabilisatoren sind Verbindungen der Elemente der zweiten Haupt- und Nebengruppe und der dritten Hauptgruppe, besonders bevorzugt sind Verbindungen der Elemente Bor, Calcium, Magnesium und Zink.

Bevorzugte Stabilisatoren sind Borverbindungen, z.B. Borphosphat (Budit 1304, Fa. Budenheim).

Bevorzugte Stabilisatoren unter den Magnesiumverbindungen sind Magnesiumoxid, Magnesiumhydroxid (z.B. Magnifin H5 der Fa. Albermarle), Magnesiumoxidhydroxide, Hydrotalcite, Dihydrotalcit, Magnesium-Carbonate, Magnesiumhydroxidcarbonate, Magnesium-Calcium-Carbonate, monobasisches, dibasisches, tribasisches Magnesiumphosphat, Magnesiumhydrogenphosphat, Magnesiumpyrophosphat oder Magnesiumborat (®Storflam MGB 11 von Fa. Storey) bevorzugt.

Bevorzugte Stabilisatoren unter den Calciumverbindungen sind Calciumborat, Calciumpyroborat, Calciumcarbonat, Calciumhydroxid, monobasisches, dibasisches, tribasisches Calciumphosphat, Calciumhydrogenphosphat und Calciumpyrophosphat bevorzugt.

Bevorzugte Stabilisatoren sind Zinkverbindungen, z.B. Zinkoxid (z.B. Zinkoxid aktiv von Rhein Chemie, Brüggemann KG, Zincit oder Calamin; Standard-Zinkoxid, Zinkweiss G6, Zinkoxid 2011, Zinkoxid F-80, Zinkweiss Pharma 8, Zinkweiss Pharma A, Zinkweiss Rotsiegel, Zinkweiss Weissiegel der Fa. Grillo-Werke AG), Zinkhydroxid, Zinkoxidhydrat.

Bevorzugte Stabilisatoren sind Zinksalze der Oxosäuren der vierten Hauptgruppe (wasserfreies Zinkcarbonat, basisches Zinkcarbonat, Zinkhydroxidcarbonat, basisches Zink-carbonathydrat, (basisches) Zinksilicat, Zinkhexafluorosilicat, Zinkhexafluorosilicat hexahydrat, Zinkstannat, Zink-Magnesium-Aluminium-Hydroxid-Carbonat).

Bevorzugte Stabilisatoren sind Zinksalze der Oxosäuren der dritten Hauptgruppe (Zinkborat, z.B. ® Firebrake ZB, Firebrake 415 der Fa. Borax).

Bevorzugte Stabilisatoren sind Zinksalze der Oxosäuren der fünften Hauptgruppe (Zinkphosphat, Zinkhydrogenphosphat, Zinkpyrophosphat).

Bevorzugte Stabilisatoren sind Zinksalze der Oxosäuren der Übergangsmetalle (Zinkchromat(Vl)hydroxyd (Zinkgelb), Zinkchromit, Zinkmolybdat, z.B. ® Kemgard 911 B, Zinkpermanganat, Zinkmolybdat-Magnesiumsilicat, z.B. Kemgard 911 C der Fa. Sherwin-Williams Company, Zinkpermanganat)

Bevorzugte Stabilisatoren sind Zinksalze auch solche mit organischen Anionen, wie Zinksalze von Mono-, Di-, Oligo-, Polycarbonsäuren (Salze der Ameisensäure (Zinkformiate), der Essigsäure (Zinkacetate, Zinkacetat dihydrat, Galzin), der Trifluoressigsäure (Zinktrifluoracetat hydrat), Zinkpropionat, Zinkbutyrat, Zinkvalerat, Zinkcaprylat, Zinkoleat, Zinkstearat (Liga 101 der Fa. Greven Fett-Chemie), der Oxalsäure (Zinkoxalat), der Weinsäure (Zinktartrat), Zitronensäure (tribasisches Zinkcitrat dihydrat), Benzoesäure (Benzoat), Zinksalicylat, Milchsäure (Zinklactat, Zinklactat trihydrat), Acrylsäure, Maleinsäure, Bernsteinsäure, von Aminosäuren (Glyzin), von sauren Hydroxofunktionen (Zinkphenolat etc); Zink-para-Phenolsulfonat, Zink-para-Phenolsulfonat hydrat, Zinkacetylacetonat hydrat, Zinktannat, Zinkdimethyl-dithiocarbamat, Zinktrifluormethansulfonat.

Bevorzugte Stabilisatoren sind Zinkphosphide, Zinksulfide, Zinkselenide und Zinktelluride.

Bevorzugt beträgt der mittlere Teilchendurchmesser der eingesetzten Stabilisatoren 0,1 bis 500 µm, bevorzugt 1 bis 100 µm.

Bevorzugt beträgt der mittlere Teilchendurchmesser der eingesetzten Stabilisatoren 0,1 bis 50 µm, bevorzugt 1 bis 10 µm.

Stabilisatoren mit größerem mittlerem Teilchendurchmesser ergeben Inhomogenitäten in den flammgeschützten Polymerformkörpern. Solche mit niedrigerem mittlerem Teilchendurchmesser sind technisch schwer herzustellen.

Das Bindemittel ist so gewählt, dass das Agglomerat beim Einarbeiten in das. Polymer in separate Aggregate und/oder Primärpartikel mit einer mittleren Teilchengrößen von 0,1 bis 500 µm aufbricht.

Das Bindemittel bindet die Aggregate und Primärpartikel aneinander, allerdings nicht so stark, dass diese sich nicht wieder in einem Polymer dispergieren lassen. Das bedeutet, dass je nach Prozess und/oder Prozessbedingungen, mit denen das phosphorhaltige thermostabilisierte Flammschutzmittel in Polymere eingearbeitet werden soll, unterschiedliche Bindemittel gewählt werden müssen.

Bevorzugt wird als Bindemittel ein Polyvinylpyrrolidon mit einem Molekulargewicht zwischen 5.000 und 2.000.000, bevorzugt 5.000 bis 200.000 eingesetzt.

Polyvinylpyrrolidon ist kommerziell in verschiedenen Molekulargewichten verfügbar als ®Luviskol (BASF, Deutschland) z.B. Luviskol(R) K90 Molekulargewicht = 1.200.000 bis 2.000.000, Luviskol(R) K30 Molekulargewicht = 45.000 bis 55.000, Luviskol(R) K17 Molekulargewicht = 7.000 bis 11.000.

Bevorzugte Bindemittel sind Polyvinylalkohol (®Mowiol 8-88, Mowiol 40-88 von Fa. Kuraray), Polyvinylbutyral (PVB), Polyvinylcaprolactam.

Bevorzugte Bindemittel sind teilverseifte Polyvinylalkohole mit 85 bis 95 Mol-% Hydrolysegrad, einem Esterwert von 80 bis 220 mg KOH/g und einer Viskosität von 2,5 bis 49 mPas*s bei 20°C in 4 Gew.-% wässriger Dispersion.

Bevorzugte Bindemittel sind auch vollverseifte Polyvinylalkohole mit 97 bis 100 Mol-% Hydrolysegrad, einem Esterwert von 3 bis 40 mg KOH/g und einer Viskosität von 2,8 bis 60 mPas*s bei 20°C in 4 Gew.-% wässriger Dispersion.

Bevorzugte Bindemittel sind Homopolymere oder gemischte Polymere basierend auf mindestens einem Monomer aus der Gruppe Acrylsäure, Amide, Cellulosederivative, Epoxiden, Ester, Hydroxyacrylsäure, Methacrylsäure, Olefine, Stearate, Urethane, Vinylacetat, Vinylalkoholderivate, Vinylcaprolactam, Vinylpyrrolidon oder Mischungen davon.

Bevorzugte Bindemittel sind auch Polycarboxylate.

Bevorzugte Polycarboxylate sind Polymere auf Basis mindestens eines der folgenden Monomere, wie Polyacrylate, Polyhydroxyacrylate, Polymaleate, Polymethacrylate oder Mischungen davon.

Geeignete Polycarboxylate sind beispielsweise die Natriumsalze der Polyacrylsäure oder der Polymethacrylsäure, beispielsweise solche mit einer relativen Molekülmasse von 800 bis 150.000 (auf Säure bezogen).

Geeignete copolymere Polycarboxylate sind insbesondere solche der Acrylsäure mit Methacrylsäure, Acrolein, Vinylacetat und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Das Verhältnis von Acrylat- zu Maleat-Einheiten in solchen Copolymeren kann bevorzugt von 30:1 bis etwa 1:1 betragen, besonders bevorzugt von etwa 10:1 bis 2:1. Ihre relative Molekülmasse, bezogen auf freie Säuren, beträgt im allgemeinen 2.000 bis 200.000, vorzugsweise 10.000 bis 120.000 und insbesondere 50.000 bis 100.000. Handelsübliche Produkte sind z. B. ®Sokalan CP 5, PA 30 und CP45 von BASF, ®Alcosperse 175 mal 177 von Alco, LMW 45 von NorsoHAAS.

Bevorzugte Bindemittel sind auch biologisch abbaubare Polymere mit mehr als zwei verschiedenen Monomereinheiten, beispielsweise solche, die als Monomere Salze der Acrylsäure und der Maleinsäure sowie Vinylalkohol bzw. Vinylalkohol-Derivate oder die als Monomere Salze der Acrylsäure und der 2-Alkylallylsulfonsäure sowie Zucker-Derivate enthalten.

Bevorzugte Bindemittel sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt.

Bevorzugte Bindemittel sind nicht oder nur teilweise neutralisierte Homo- und/oder Copolymer aus Acrylsäure, Methacrylsäure, Maleinsäure, Polyasparaginsäure, Zuckercarbonsäure und/oder weiteren Monomeren.

Bevorzugte Bindemittel sind Homopolymere der Acrylsäure oder der Methacrylsäure bzw. deren Copolymere mit weiteren ethylenisch ungesättigten Monomeren wie beispielsweise Acrolein, Dimethylacrylsäure, Ethylacrylsäure, Vinylessigsäure, Allylessigsäure, Maleinsäure, Fumarsäure, Itaconsäure, Meth(allylsulfonsäure), Vinylsulfonsäure, Styrolsulfonsäure, Acrylamidomethylpropansulfonsäure, sowie Phosphorsäuregruppen enthaltende Monomere wie beispielsweise Vinylphosphonsäure, Allylphosphonsäure und Acrylamidomethylpropanphosphonsäure und deren Salze sowie Hydroxyethyl(meth)acrylatsulfate, Allylalkoholsulfate und -phosphate.

Bevorzugte Polycarboxylate kommen in Form ihrer wasserlöslichen Salze, insbesondere in Form der Alkalimetallsalze, besonders der Natrium- und/oder Kaliumsalze, in Betracht.

Bevorzugte Polycarboxylate sind auch Terpolymere. Bevorzugte Terpolymere enthalten dabei 60 bis 95 Gew.-%, insbesondere 70 bis 90 Gew.-% (Meth)acrylsäure bzw. (Meth)acrylat, besonders bevorzugt Acrylsäure bzw. Acrylat, und Maleinsäure bzw. Maleat sowie 5 bis 40 Gew.-%, vorzugsweise 10 bis 30 Gew.-% Vinylalkohol und/oder Vinylacetat. Ganz besonders bevorzugt sind dabei Terpolymere, in denen das Gewichtsverhältnis (Meth)acrylsäure bzw. (Meth)acrylat zu Maleinsäure bzw. Maleat zwischen 1 : 1 und 4:1, vorzugsweise zwischen 2 : 1 und 3 : 1 und insbesondere 2,1 und 2,5 : 1 liegt. Dabei sind sowohl die Mengen als auch die Gewichtsverhältnisse auf die Säuren bezogen.

Bevorzugte Polycarboxylate sind Terpolymere, die dabei 40 bis 60 Gew.-%, insbesondere 45 bis 55 Gew.-% (Meth)acrylsäure bzw. (Meth)acrylat enthalten, besonders bevorzugt Acrylsäure bzw. Acrylat, 10 bis 30 Gew.-%, vorzugsweise 15 bis 25 Gew.-% Methallylsulfonsäure bzw. Methallylsulfonat und als drittes Monomer bis 40 Gew.-%, vorzugsweise 20 bis 40 Gew.-% eines Kohlenhydrats. Dieses Kohlenhydrat kann dabei beispielsweise ein Mono-, Di-, Oligo- oder Polysaccharid sein, wobei Mono-, Di- oder Oligosaccharide bevorzugt sind, besonders bevorzugt ist Saccharose.

Bevorzugte Polycarboxylate sind Terpolymere, die eine relative Molekülmasse zwischen 1.000 und 200.000 aufweisen, vorzugsweise zwischen 200 und 50.000 und insbesondere zwischen 3.000 und 10.000 auf.

Bevorzugte Polycarboxylate sind Terpolymere, die entweder vollständig oder zumindest partiell, insbesondere zu mehr a 50%, bezogen auf die vorhandenen Carboxylgruppen, neutralisiert sind. Besonders bevorzugt ist dabei ein vollständig neutralisiertes Terpolymer das also aus den Salzen der monomeren Säuren, insbesondere den Natrium- oder Kaliumsalzen der monomeren Säuren, und Vinylalkohol oder einem Kohlenhydrat besteht.

Bevorzugte Bindemittel sind Polycarboxylate, die entweder als Pulver oder als wässrige Lösung eingesetzt werden können, wobei 20 bis 55 gew.-%ige wässrige Lösungen bevorzugt sind.

Bevorzugte Bindemittel sind auch Polymere auf Basis von mindestens einem folgender Monomere oder Mischungen davon: Maleinsäure, Maleinsäureanhydrid, Methylstyrol, Styrol, Styrolsulfonsäure.

Besonders bevorzugt sind Homo- und Copolymere der Polystyrolsulfonsäure. Bevorzugt sind Polystyrolsulfonsäure-Homopolymere mit Molgewichten von 10.000 bis 1.200.000.

Bevorzugt sind Polystyrolsulfonsäure-Homopolymere als wässrige Lösungen mit 20 bis 50 Gew.-% Aktivsubstanz.

Bevorzugt sind Polystyrolsulfonsäure-Homopolymere als wässrige Lösungen mit Viskositäten von 5 bis 1600 mPa*s.

Bevorzugt sind Polystyrolsulfonsäure-Homopolymere als wässrige Lösungen mit pH-Werten von 7-11.

Bevorzugt sind Polystyrolsulfonsäure-Maleinsäureanhydrid-Copolymere mit Molgewichten von 10.000 bis 1.200.000.

Bevorzugt sind Polystyrolsulfonsäure-Copolymere mit Molverhältnissen von Styrolsulfonsäure zu Maleinsäure von 1:1 bis 4:1.

### Wasserglas

Bevorzugt sind wässrige Alkalisilicatlösungen mit einem Siliciumdioxid/Natriumoxid-Molverhältnis von 1 zu 2 bis 4 zu 1. Bevorzugt beträgt der Aktivsubstanzgehalt der Lösungen 5 bis 50 Gew.-%

### Vinylacetat-Polymere

Bevorzugt sind Polymere auf Basis von mindestens einem folgender Monomere oder Mischungen davon: Vinylacetat, 2-Ethylhexylacrylat, Acrolein, Acrylester, Acrylsäure, Crotonsäure, Dibutylmaleat, Ethylen, Methylmetacrylat, n-Butylacrylat, N-Hydroxymethylacrylamid, N-Vinylpyrrolidon, Styrol, tert-Butylchlorid, Vinylchlorid, Vinyllaurat, Vinylpropionat. Bevorzugte Vertreter sind ™Airflex EP3360, EP16, EAF375 der Fa. Air Products und ™Mowilith LDM der Fa. Kuraray.

### Acrylate

Bevorzugt sind Polymere auf Basis von mindestens einem folgender Monomere oder Mischungen davon: Methacrylat, 1,2-Butadien, 1,3-Butadien, 2-Ethylhexylacrylat, Acrylamid, Acrylnitril, Acrylsäure, Ethylacrylat, Ethylmethacrylat, Isobutylacrylat, Isobutylmethacrylat, Laurylacrylat und/oder Methylmethacrylat, Methacrylamid Methacrylnitril, Methacrylsäure, n-Butylacrylat, n-Butylmethacrylat, n-Hexylacrylat, n-Hexylmethacrylat, n-Propylacrylat, sec-Butylacrylat, Styrol, tert-Butylacrylat, tert-Butylmethacrylat, Vinylacetat, Vinylchlorid, Vinylidenchlorid, Vinylpropionat. Bevorzugte Vertreter sind ®Acronal 18D der Fa. BASF.

### Polymilchsäure

Bevorzugt sind weiterhin Homopolymere der Milchsäure (Polylactide) oder Poly(lactid-caprolacton)-Copolymere, Poly(lactid-glycolid)-Copolymere, Poly(lactid-caprolacton-glycolid)-Terpolymere Poly(lactid-glycolid-ethylenglycol)-Terpolymere. Die bevorzugten Molekulargewichte sind 5.000 bis 150.000.

### Stärke und Cellulose

Weiterhin lassen sich lösliche Stärkepräparate und andere als die oben genannten Stärkeprodukte verwenden, z.B. abgebaute Stärke, Aldehydstärken usw. Carboxyalkylcellulose (Na- Salz), Hydroxyethylcellulose, Hydroxypropylcellulose, Alkylcellulose, Alkylhydroxyethylcellulose (Alkyl ist bevorzugt Methyl) und Natriumcarboxymethylcellulose.

### Bevorzugte Bindemittel sind auch filmbildende Bindemittel.

Bevorzugte Bindemittel sind auch Homopolymerisate auf Basis Vinylacetat, Copolymerisate auf Basis Vinylacetat, Ethylen und Vinylchlorid, Copolymerisate auf Basis Vinylacetat und einem Vinylester einer langkettigen, verzweigten Carbonsäure, Copolymerisate auf Basis Vinylacetat und Maleinsäure-di-n-Butylester, Copolymerisate auf Basis Vinylacetat und Acrylsäureester, Copolymerisate auf Basis Styrol und Acrylsäureester, Copolymerisate auf Basis Acrylat/Vinyltoluol, Copolymerisate auf Basis Acrylat/Styrol, Copolymerisate auf Basis Acrylat/Vinyl und/oder selbstvernetzende Polyurethan-Dispersionen.

### Verfahren zur Herstellung des Agglomerates

Die Erfindung betrifft auch ein Verfahren zur Herstellung von phosphorhaltigen thermostabilisierten Flammmittelagglomeraten, **dadurch gekennzeichnet, dass** man Aggregate und/oder Primärteilchen von
a) einem Phosphinsäuresalz der Formel (1) und/oder von einem Diphosphinsäuresalz der Formel (II) und/oder von deren Polymeren und
b) einem Stabilisator und
c) wahlweise mindestens einem Synergisten
   in Gegenwart d) eines Bindemittels und
e) wahlweise eines Granulierhilfsmittels agglomeriert
   und wahlweise eine Reifephase durchgeführt
   und wahlweise das Granulierhilfsmittel entfernt
   und wahlweise Agglomerate geeigneter Größe abtrennt
   und wahlweise Agglomerate nicht geeigneter Größe aufbereitet und in den Agglomerier-Prozess zurückführt.

Die Komponenten a - e) können in einem Arbeitsgang gemischt und agglomeriert werden oder in verschiedenen getrennten Arbeitsgängen in beliebiger Abfolge.

Bevorzugt ist bei der Agglomerierung ein spezifischer Energieeintrag von 0,0014 bis 1 kWh/kg, besonders bevorzugt 0,05 bis 0,5 kWh/kg.

Die Agglomerierung erfolgt bevorzugt bei einem Druck von 10 bis 100.000.000 Pa, über eine Zeitdauer von 0,01 bis 1.OOOh und einer Temperatur von -20 bis +500°C, besonders bevorzugt bei 50 bis 350°C.

Die Reifephase erfolgt bevorzugt bei einem Druck von 10 bis 100.000.000 Pa, über eine Zeitdauer von 0,01 bis 1.000h und einer Temperatur von -20 bis +500°C, besonders bevorzugt bei 50 bis 350°C.

Die Entfernung des Granulierhilfsmittels erfolgt einstufig oder mehrstufig bevorzugt bei einem Druck von 10 bis 100.000.000 Pa, über eine Zeitdauer von 0,01 bis 1.000h und einer Temperatur von -20 bis +500°C, besonders bevorzugt bei 50 bis 350°C.

Das Granulierhilfsmittel ist bevorzugt mindestens ein Vertreter aus der Gruppe Alkohole, Ester, Ketone, Kohlenwasserstoffe, Wasser.

Bevorzugt ist der Zusatz von 5 bis 50 Gew.-% Granulierhilfsmittel bezogen auf trockener Feststoff, besonders bevorzugt 10 bis 40 Gew.-%

Die Agglomerierung erfolgt bevorzugt in Mischern des Typs Doppelkonusmischer der Fa. TELSCHIG Verfahrenstechnik GmbH, Doppelwellen-Paddelmischer Fa. Eirich, Flexomix-Mischertypen der Fa. Schugi, Fliessbettmischer der Fa. TELSCHIG Verfahrenstechnik GmbH, Fluidmischer der Fa. Thyssen Henschel Industrietechnik GmbH, Freifallmischer der Firmen TELSCHIG Verfahrenstechnik GmbH (Typ WPA6) oder Hauf, Intensivmischer - Mischer der Fa. Eirich (z.B. Typ R02, R 12, DE 18, Evactherm, Kegelschneckenmischer der Fa. Nauta, in denen das Mischgut nach dem Archimedes-Prinzip durch eine Schnecke umwälzt wird, Kühlmischer der Firmen Papenmeier oder Thyssen Henschel Industrietechnik GmbH, Luftstrahlmischer der Fa. TELSCHIG Verfahrenstechnik GmbH, Pflugscharmischertypen der Firmen Lödige (Typen M5 oder M20 ), TELSCHIG Verfahrenstechnik GmbH, oder Minox (Typen PSM 10 bis 10.000), Planeten-Mischmaschinen der Fa. Hobart, Ringspalt- und Ringschichtmischer der Firmen Lödige, (z.B. Typ CB30, CB Konti-Mischer), Niro (Typ HEC), Drais/Mannheim (z.B. Typ K-TTE4), Sprühmischer der Fa. TELSCHIG Verfahrenstechnik GmbH, Taumel- bzw. Container-Mischer z.B. der Fa. Thyssen Henschel Industrietechnik GmbH, Zig-Zag-Mischer der Fa. Niro.

Das erfindungsgemäße Verfahren kann sowohl in Hochintensitäts- als auch in langsamlaufenden Mischern durchgeführt werden.

Die Hochintensitätsmischer können in einer ersten Verfahrensstufe langsamlaufend betrieben werden und der für eine zweite Verfahrensstufe benötigte Energieeintrag bei den langsamlaufenden Mischern durch Zusatzaggregate wie beispielsweise Messerkränze erbracht werden.

Beispiele für schnelllaufende Mischer sind der Lödige^{™} CB.30 Recycler, der Schugi^{™} Granulator, der Schugi^{™} Flexörnix, der Eirich^{™} -Mischer Typ R oder der Drais^{™} K-TTP 80.

Beispiele für langsamlaufende Mischgranulatoren sind der Drais^{™} K-T 160 sowie der Lödige^{™} KM 300. Letzterer wird oftmals als Lödige-Pflugscharmischer bezeichnet. Geeignete Pflugscharmischer weisen als Umlaufgeschwindigkeit der Mischorgane vorzugsweise Geschwindigkeiten zwischen 2 und 7 m/s auf, während andere geeignete Mischer Umlaufgeschwindigkeiten von 3 bis 50 m/s, insbesondere zwischen 5 und 20 m/s aufweisen

Erfindungsgemäß sind auch Granulierteller geeignet.

Das Granulierhilfsmittel wird bevorzugt durch Trocknen entfernt. Bevorzugt sind Trocknungstemperaturen von 50 bis 350°C.

Bevorzugt sind Konvektivtrockner mit Trockenmittelstrom über das Trockengut, z.B. Kammertrockner, Kanaltrockner, Bandtrockner, Mischtrockner (Etagentrockner, Trommeltrockner, Schaufeltrockner).

Bevorzugt sind Konvektivtrockner mit Trockenmittelstrom durch das Trockengut, z.B. Darren (Rosttrockner), Kammer-Hordentrockner, Schaufeltrockner (Schleudertrockner), Mahltrockner.

Bevorzugt sind Konvektivtrockner mit Trockenmittelstrom um das Trockengut, z.B. Schwebetrockner (Stromtrockner, Fließbetttrockner, Zyklontrockner, Sprühtrockner), Kugelbett-Trockner (Trägerkugeltrockner).

Bevorzugt sind Kontakttrockner, z.B. Schranktrockner, Dünnschichttrockner (Drallrohrtrockner, Walzentrockner, Schneckenverdampfer), Mischtrockner (Röhrentrockner, Etagen-Trommeltrockner, Schaufeltrockner).

Bevorzugt sind Vakuumtrockner, z.B. Vakuumtrockenschränke, Vakuumwalzentrockner, Vakuumschaufeltrockner.

Die Gas-Einlasstemperatur zu den Trocknern beträgt bevorzugt 50 bis 320°C besonders bevorzugt 60°C bis 250°C, die Austrittstemperatur ist bevorzugt 25 bis 180°C.

Die Agglomerate geeigneter Größe werden durch die Klassierungsverfahren nach dem Stand der Technik (Sieben, Sichten etc) aussortiert.

Die Aufbereitung nicht korngrößengeeigneter Agglomerate wird bevorzugt durch Mahlen bewerkstelligt.

Die Erfindung betrifft auch eine flammgeschützte Polymerformmasse, die die erfindungsgemäßen phosphorhaltigen thermostabilisierten Flammmittelagglomerate enthält.

Bevorzugt enthält die flammgeschützte Polymerformmasse
1 bis 50 Gew.-% phosphorhaltige thermostabilisierte Flammschutzmittelagglomerate,
1 bis 99 Gew.-% Polymer oder Mischungen derselben
0 bis 60 Gew.-% Additive
0 bis 60 Gew.-% Füllstoff und / oder Verstärkungsmaterialien.

Besonders bevorzugt enthält die flammgeschützte Polymerformmasse
5 bis 30 Gew.-% phosphorhaltige thermostabilisierte Flammschutzmittelagglomerate,
5 bis 90 Gew.-% Polymer oder Mischungen derselben
5 bis 40 Gew.-% Additive
5 bis 40 Gew.-% Füllstoff und / oder Verstärkungsmaterialien.

Bevorzugt handelt es sich bei dem Polymer um ein thermoplastisches oder duroplastisches Polymer.

Bevorzugt handelt es sich bei den duroplastischen Polymeren um Formaldehyd-, Epoxid-, Melamin-Phenolharz-Polymere und/oder Polyurethane.

Bevorzugt handelt es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/Acrylnitril-Butadien-Styrol).

Besonders bevorzugt handelt es sich bei den thermoplastischen Polymeren um Polyamid, Polyester oder ABS.

Die Erfindung betrifft auch Polymer-Formkörper, -Filme, -Fäden und -Fasern, die die erfindungsgemäßen phosphorhaltigen thermostabilisierten Flammmittelagglomerate und/oder die erfindungsgemäßen flammgeschützten Polymerformmassen enthalten.

Bevorzugt enthalten die Polymer-Formkörper, -Filme, -Fäden und -Fasern
1 bis 50 Gew.-% phosphorhaltige thermostabilisierte Flammschutzmittelagglomerate
1 bis 99 Gew.-% Polymer oder Mischungen derselben
0 bis 60 Gew.-% Additive
0 bis 60 Gew.-% Füllstoff und / oder Verstärkungsmaterialien.

Besonders bevorzugt enthalten die Polymer-Formkörper, -Filme, -Fäden und -Fasern 5 bis 30 Gew.-% phosphorhaltige thermostabilisierte Flammschutzmittelagglomerate
5 bis 90 Gew.-% Polymer oder Mischungen derselben
5 bis 40 Gew.-% Additive
5 bis 40 Gew.-% Füllstoff und/oder Verstärkungsmaterialien.

Bestimmung der Kornverteilung durch Siebanalyse In eine Siebmaschine der Fa. Retsch werden die Einsätze mit gewünschten Sieben eingesetzt. Dabei nimmt die Maschenweite der Siebe von oben nach unten ab. 50 g des zu untersuchenden Pulvers werden auf das weiteste Sieb aufgegeben. Durch die Schwingbewegung der Siebmaschine wird das Pulvermaterial durch die verschiedenen Siebe befördert. Die Rückstände auf den Sieben werden ausgewogen und rechnerisch auf die Materialeinwaage bezogen. Aus den Werten können d50-(mittlerer Teilchendurchmesser) und d90-Werte berechnet werden.

### Wärmebehandlung und Bestimmung der Farbwerte

Das zu untersuchende Granulat wird 15 min in einem Muffelofen bei 280°C wärmebehandelt. Danach wird mit einem Farbmessgerät des Types Luci 100 der Fa. Dr. Lange der Weißgrad bestimmt. Die Farbwerte werden im System nach Hunter (CIE-LAB-System) angegeben. L-Farbwerte gehen von 0 (schwarz) bis 100 (weiß), a-Farbwerte von -a (grün) bis +a (rot) und b-Farbwerte von -b (blau) bis +b (gelb). Je größer negativ der b-Wert also ist, desto intensiver blau ist das untersuchte Material.

### Abrieb

Die Probe wird mit einem Vibrationsrüttler VE 1000 der Firma Retsch 2 min bei einer Amplitude von 2 mm ohne Intervall über ein 0,2 mm Sieb abgesiebt. Die Probenmenge soll so gewählt werden, dass nach der Siebung mindestens 50 g von Material gröber als 200 µm vorhanden ist. 50g der Fraktion, die gröber als 200 µm ist, werden auf 0,1 g genau in einen Siebsatzboden eingewogen. 18 Stahlkugeln (Durchmesser 10 mm, Gesamtgewicht 72,8 g) werden dazugegeben, anschließend wird die Siebmaschine gestartet für 5 min bei einer Amplitude von 2 mm ohne Intervall. Nach der Mahlung werden die Stahlkugeln entfernt und die gesamte Probe auf ein 200 µm-Sieb gegeben und erneut 2 min bei einer Amplitude von 2 mm ohne Intervall gesiebt. Der Prozentuale Anteil von Material, das feiner als 200 µm ist, ergibt den Abrieb.

### Beispiel 1 (Vergleich)

In einem 201-Pflugscharmischer der Fa. Lödige werden 3,920 g Aluminiumphosphinat vorgelegt. Bei Raumtemperatur werden 0,080 kg PVA, das in 1,333 kg Wasser gelöst ist, während 15 min aufgedüst. Dies geschieht unter kontinuierlichem Mischen bei Nenndrehzahl (ca. 230 U/min) und eingeschalteten Messerköpfen. Dann wird 5 min nachgemischt. Das Produkt wird in einem Labortrockner der Fa. Retsch 60 min bei 120°C Lufteintrittstemperatur getrocknet, dann durch zwei Siebe (200 µm und 1700 µm) gesiebt. Gutprodukt ist die Kornfraktion größer 200 µm und unter 1700 µm.

### Beispiel 2

Wie in Beispiel 1 wird aus 3,920 g einer Mischung von ca. 94,9 % Aluminiumphosphinat und ca. 5,1 % Stabilisator durch Aufsprühen von 0,080 kg PVA, das in 1,333 kg Wasser gelöst ist, und Mischen, Trocknen und Sieben ein Agglomerat hergestellt.

### Beispiel 3

Wie in Beispiel 1 wird aus 3,980 g einer Mischung von ca. 98,5 % Aluminiumphosphinat und ca. 1 % Stabilisator durch Aufsprühen von 0,020 kg PVA, das in 2,154 kg Wasser gelöst ist, und Mischen, Trocknen und Sieben ein Agglomerat hergestellt.

### Beispiel 4

Wie in Beispiel 1 werden aus 3,400 g Aluminiumphosphinat, 0,400g Stabilisator eine Mischung hergestellt. Dann werden 0,200 kg PVA, die in 1,714 kg Wasser gelöst sind, aufgesprüht und durch Mischen, Trocknen und Sieben ein Agglomerat hergestellt.

### Beispiel 5

Wie in Beispiel 1 werden aus 3,800 g einer Mischung von ca. 98,9 % Aluminiumphosphinat und ca. 1,1 % Stabilisator durch Aufsprühen von 0,200 kg PVA, die in 1,000 kg Wasser gelöst sind, und Mischen, Trocknen und Sieben ein Agglomerat hergestellt.

### Beispiel 6 (Vergleich)

In einem Mischer der Fa. Schugi (Typ Flexomix 160) mit nachgeschaltetem Batch-Fließbett werden während einer Stunde 1470 kg einer Mischung aus 67Gew.-% Aluminiumphosphinat und 33 Gew.-% Synergist und eine Lösung von 30 kg PVA in 448 kg Wasser miteinander vermischt und auf den gewünschten Feuchtegehalt nachgetrocknet (Lufteintrittstemperatur 150°C). Das Produkt wird mit einem Allgaier-Sieb durch ein 800 µm-Sieb und über ein 200 µm-Sieb abgesiebt.

### Beispiel 7

Wie in Beispiel 6 wird aus 1470 kg einer Mischung aus 63,2 Gew.-% Aluminiumphosphinat, 31,6 Gew.-% Synergist und 5,1 % Stabilisator und einer Lösung von 30 kg PVA in 448 kg Wasser durch Mischen, Trocknen und Sieben ein Agglomerat hergestellt.

### Beispiel 8

Wie in Beispiel 1 werden aus 2,820 kg Aluminiumphosphinat, 0,960 kg Synergist und 0,200 kg Stabilisator eine Mischung hergestellt. Dann zunächst 1,690 kg Wasser aufgesprüht, danach 0,044 kg PCA und durch Mischen, Trocknen und Sieben ein Agglomerat hergestellt.

### Beispiel 9

Auf einem Granulierteller mit ca. 70 cm Durchmesser werden 0,396 kg einer Mischung von ca. 49,5 Gew.-% Aluminiumphosphinat, ca. 49,5 Gew.-% Synergist und ca. 1 % Stabilisator vorgelegt und durch Aufsprühen von zunächst 0,266 kg Wasser und danach von 0,010 kg PAS granuliert. Die Drehgeschwindigkeit des Tellers beträgt 70U/min, der Anstellwinkel 70-75 Grad, es herrscht Raumtemperatur. Das Produkt wird in einem Labortrockner der Fa. Retsch 60 min bei 120°C Lufteintrittstemperatur getrocknet, dann durch zwei Siebe (300 µm und 3.000 µm) gesiebt. Gutprodukt ist die Kornfraktion zwischen 300 µm und 3.000 µm.

### Beispiel 10

Wie in Beispiel 9 wird aus 0,396 kg einer Mischung von ca. 22,2 Gew.-% Aluminiumphosphinat, ca. 67,7 Gew.-% Synergist und ca. 10,1 % Stabilisator und einer Lösung von 0,008 kg EVA, das in 0,266 kg Wasser gelöst ist, durch Aufsprühen, Mischen, Trocknen und Sieben ein Agglomerat hergestellt.

### Verwendete Chemikalien

- ALP: Aluminiumphosphinat, ^{™}Exolit OP1230 der Fa Clariant GmbH
- SYN: ^{™}Melapur 200-70, Fa. Ciba SC
- STB 1: ^{™}Firebrake 500, Fa. Borax
- STB 2: ^{™}Zinkoxid aktiv, Fa. Rheinchemie
- STB 3: Magnesiumborat, ^{™}Storflam MGB 11, Fa. Storey
- STB 4: Borphosphat, ^{™}Budit 1304, Fa. Budenheim
- PVA: Polyvinylalkohol, ^{™}Mowiol 3-85, Fa. Kuraray
- PCA: Acrylsäure-Maleinsäure-Copolymer, Natriumsalz MW=50000 ^{™}Sokalan CP 5, 45 % Lsg, Fa. BASF
- PAS: Polyacrylsäure, Natriumsalz MW=30000 40 % wssr. Lsng, Fa. Sigma- Aldrich
- EVA: wässrige Ethylen-Acrylsäureester-Vinylacetat-Terpolymer-Dispersion, ca. 51 Gew.-%, ^{™}Airflex EAF375. Fa. Air Products

**Tabelle 1: Eigenschaften der phosphorhaltigen thermostabilisierten Flammschutzmittelagglomerate**

| Beispiel | | 1 Vgl. | 2 | 3 | 4 | 5 | 6 Vgl | 7 | 8 | 9 | 10 |
|---|---|---|---|---|---|---|---|---|---|---|---|
| ALP | [Gew.-%] | 98 | 93 | 98,5 | 85 | 94 | 66 | 62 | 70,5 | 49 | 22 |
| SYN | [Gew.-%] | | | | | | 32 | 31 | 24 | 49 | 67 |
| STB 1 | [Gew.-%] | 0 | 5 | 1 | | | 0 | 5 | | | |
| STB 2 | | | | | 10 | 1 | | | 5 | | |
| STB 3 | | | | | | | | | | 1 | |
| STB 4 | | | | | | | | | | | 10 |
| PVA | [Gew.-%] | 2 | 2 | 0,5 | 5 | 5 | 2 | 2 | | | |
| PCA | [Gew.-%] | | | | | | | | 0,5 | | |
| PAS | [Gew.-%] | | | | | | | | | 1 | |
| EVA | [Gew.-%] | | | | | | | | | | 1 |
| Weißgrad | L-Wert | 70,93 | 91,5 | 92,1 | 93,9 | 86,2 | 74,49 | 1,549 | 2,089 | 0,23 | 96,1 |
| Weißgrad | a-Wert | 4,74 | -0,2 | 0,2 | 0,3 | 1,5 | 3,26 | -0,24 | 0,16 | 0,28 | 0,11 |
| Weißgrad | b-Wert | 12,97 | 5,2 | 2,7 | 1,6 | 7,2 | 10,57 | 5,15 | 2,72 | 2,99 | 1,20 |
| Restfeuchte | [Gew.-%] | 0,2 | 0,2 | 0,4 | 0,5 | 0,3 | 0,3 | 0,3 | 0,7 | 0,5 | 0,6 |
| Abrieb | [%] | 77 | 71 | 74 | 87 | 76 | 42 | 38 | 65 | 57 | 64 |

Es wurde überraschend gefunden, dass mit der Wahl eines erfindungsgemäßen Stabilisators die Verfärbung beim Erhitzen der phosphorhaltigen thermostabilisierten Flammschutzmittelagglomerate weitgehend verhindert werden kann.

Dies wird zunächst für synergistenfreie Agglomerate deutlich, wenn die Farbwerte von Vergleichsbeispiel 1 mit denen der erfindungsgemäßen Beispiele 2 bis 5 verglichen werden.
L-, a- und b-Farbwerte liegen beim Vergleichsbeispiel außerhalb der erfindungsgemäßen Bereiche (L: 88 bis 99,9, a: -2 bis +2, b: -2 bis +8), bei den erfindungsgemäßen Beispielen darin.

Der überraschende Stabilisierungseffekt in synergistenhaltigen Agglomeraten wird durch Vergleich des Vergleichsbeispiels 6 mit dem erfindungsgemäßen Beispiel 7 deutlich.
L-, a- und b-Farbwerte liegen beim Vergleichsbeispiel außerhalb der erfindungsgemäßen Bereiche (L: 88 bis 99,9, a: -2 bis +2, b: -2 bis +8), bei dem erfindungsgemäßen Beispiel innerhalb.

Weiterhin überraschend ist, dass die Stabilisierung auch bei verschiedenen Bindemitteln wirkt, wie die Beispiele 7, 8, 9 und 10 zeigen.
L-, a- und b-Farbwerte liegen bei den erfindungsgemäßen Beispielen innerhalb der erfindungsgemäßen Bereiche (L: 88 bis 99,9, a: -2 bis +2, b: -2 bis +8.

**Tabelle 2: Einsatzmengen für die Herstellung der phosphorhaltigen thermostabilisierten Flammschutzmittelagglomerate**

| Beispiel | | 1 Vgl. | 2 | 3 | 4 | 5 | 6 Vgl | 7 | 8 | 9 | 10 |
|---|---|---|---|---|---|---|---|---|---|---|---|
| Mischung ALP und STAB | [kg] | - | 3,920 | 3,980 | | 3,800 | | | | | |
| Mischung ALP und SYN | | | | | | | 1470 | | | | |
| Mischung ALP, SYN und STB | | | | | | | | 1470 | | 0,396 | 0,396 |
| ALP | [kg] | 3,920 | | | 3,400 | | | | 2,820 | | |
| SYN | | | | | | | | | 0,960 | | |
| STB | | | | | 0,400 | | | | 0,200 | | |
| Wasser | [kg] | 1,333 | 1,333 | 2,154 | 1,714 | 1,000 | 448 | 448 | 1,690 | 0,266 | 0,266 |
| PVA | [kg] | 0,080 | 0,080 | 0,020 | 0,200 | 0,200 | 30 | 30 | | | |
| PCA | [kg] | | | | | | | | 0,044 | | |
| PAS | [kg] | | | | | | | | | 0,010 | |
| EVA | [kg] | | | | | | | | | | 0,008 |

## Patentansprüche

1. Verwendung von Stabilisatoren in phosphorhaltigen thermostabilisierten Flammschutzmittelagglomeraten **zur Stabilisierung gegen deren Verfärbung beim Erhitzen**, **dadurch gekennzeichnet, dass** es sich bei den Stabilisatoren um Verbindungen der Elemente Bor, Calcium, Magnesium und Zink handelt, und es sich bei den phosphorhaltigen thermostabilisierten Flammschutzmittelagglomeraten um Zusammensetzungen handelt, die
a) **60 bis 99,89** Gew.-% Aggregate und/oder Primärteilchen von einem Phosphinsäuresalz der Formel (I) und/oder von einem Diphosphinsäuresalz der Formel (II) und/oder von deren Polymeren, 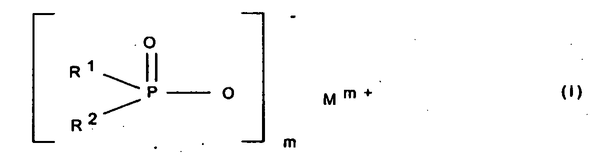 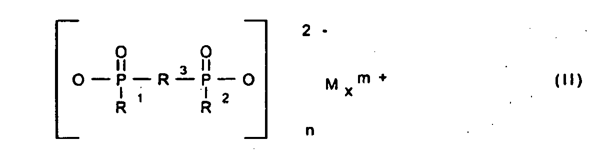 worin
R¹, R² gleich oder verschieden sind und C1-C6-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Zn, Sb, Sn, Ge, Zn, Ti, Fe, Zr, Ce, Bi, Sr, Mn, Li, Na, K und/oder eine protonierte Stickstoffbase;
m 1 bis 4; n 1 bis 4; x 1 bis 4 bedeuten,
b) 0,01 bis 20 Gew.-% Bindemittel, wobei es sich bei dem Bindemittel um Polyvinylacetat, Polyvinylpyrrolidon, **Polyvinylalkohol**, Polycarboxylat, Acrylsäure-Maleinsäure-Copolymer, Polystyrolsulfonsäure, Polystyrolsulfonsäure-Maleinsäureanhydrid-Copolymer, Wasserglas, Vinylacetat-Polymer, Polyacrylat / Polyacrylsäure, Polymilchsäure, Stärke und Cellulosederivate handelt
c) 0,1 bis 20 Gew.-% Stabilisator enthalten, wobei es sich dabei um **Borphosphat,** Calciumborat, Calciumpyroborat, Calciumcarbonat, Calciumhydroxid, Calciumphosphate, Calciumhydrogenphosphate, **Calciumpyrophosphat,** um Magnesiumoxid, Magnesiumhydroxid, Magnesiumoxidhydroxide, Hydrotalcite, Dihydrotalcit, Magnesium-Carbonate, Magnesiumhydroxidcarbonate, Magnesium-Calcium-Carbonate, Magnesiumphosphate, Magnesiumhydrogenphosphate, Magnesiumpyrophosphat und/oder **Magnesiumborat,** um Zinkhydroxid, Zinkoxid, Zinkoxidhydrat; um Zinkcarbonate, Zinkhydroxidcarbonat, Zinkcarbonathydrat, Zinksilicat, Zinkhexafluorosilicat, Zinkhexafluorosilicat hexahydrat, Zinkstannat, Zink-Magnesium-Aluminium-Hydroxid-Carbonat; um Zinkborat, Zinkphosphat, Zinkhydrogenphosphat, Zinkpyrophosphat; um Zinkchromat(Vl)-hydroxyd, Zinkchromit, Zinkmolybdat, Zinkpermanganat, Zinkmolybdat-Magnesiumsilicat; um Zinkformiate, Zinkacetate, Zinktrifluoracetate, Zinkpropionat, Zinkbutyrat, Zinkvalerat, Zinkcaprylat, Zinkoleat, Zinkstearat, Zinkoxalat, Zinktartrat, Zinkcitrat, Zinknenzoat, Zinksalicylat, Zinklactat, Zinkphenolat, Zinkphenolsulfonat, Zinkacetylacetonat, Zinktannat, Zinkdimethyldithiocarbamat, Zinktrifluormethansulfonat; und um Zinkphosphide, Zinksulfide, Zinkselenide und Zinktelluride handelt und weiterhin mindestens einen Synergisten enthalten und wobei die L-Farbwerte **nach Hunter (CIE-LAB-System)** der phosphorhaltigen thermostabilisierten Flammschutzmittelagglomerate nach Wärmebehandlung von 81 bis 99,9 betragen.

2. Verwendung nach Anspruch 1, **dadurch gekennzeichnet, dass** es sich bei den Stabilisatoren um Borphosphat, Calciumpyrophosphat, Magnesiumpyrophosphat, Magnesiumborat, Zinkhydroxid, Zinkstearat und/oder Zinkpyrophosphat handelt.

3. Verwendung nach Anspruch 1 oder 2, **dadurch gekennzeichnet, dass** die a-Farbwerte der phosphorhaltigen thermostabilisierten Flammschutzmittelagglomerate von -2 bis +2 betragen.

4. Verwendung nach einem oder mehreren der Ansprüche 1 bis 3, **dadurch gekennzeichnet, dass** die b-Farbwerte der phosphorhaltigen thermostabilisierten Flammschutzmittelagglomerate von -2 bis +8 betragen.

5. Verwendung nach einem oder mehreren der Ansprüche 1 bis 4, **dadurch gekennzeichnet, dass** es sich bei dem Synergisten um einen solchen handelt, der eine Stickstoff-, Phosphor- oder Phosphorstickstoffverbindung enthält.

6. Verwendung nach Anspruch 5, **dadurch gekennzeichnet, dass** es sich bei dem Synergisten um Melaminpyrophosphat, Melaminpolyphosphat, Melampolyphosphat, Melempolyphosphat, Melonpolyphosphat, Melamincyanurat, Melamin, Melam, Melem und/oder Melon handelt.

7. Verwendung von stabilisatorhaltigen phosphorhaltigen thermostabilisierten Flammschutzmittelagglomeraten nach einem oder mehreren der Ansprüche 1 bis 6 in flammgeschützten Polymer-Formmassen und flammgeschützten PolymerFormkörpern, -Filme, -Fäden und -Fasern.

8. Verwendung nach Anspruch 7, **dadurch gekennzeichnet, dass** die flammgeschützte Polymerformmasse
1 bis 50 Gew.-% phosphorhaltige thermostabilisierte Flammschutzmittelagglomerate nach einem oder mehreren der Ansprüche 1 bis 6,
1 bis 99 Gew.-% Polymer oder Mischungen derselben
0 bis 60 Gew.-% Additive
0 bis 60 Gew.-% Füllstoff und / oder Verstärkungsmaterialien enthält.

9. Verwendung nach Anspruch 7, **dadurch gekennzeichnet, dass** die flammgeschützte Polymerformkörper, -Filme, -Fäden und -Fasern
1 bis 50 Gew.-% phosphorhaltige thermostabilisierte Flammschutzmittelagglomerate nach einem oder mehreren der Ansprüche 1 bis 6,
1 bis 99 Gew.-% Polymer oder Mischungen derselben
0 bis 60 Gew.-% Additive
0 bis 60 Gew.-% Füllstoff und / oder Verstärkungsmaterialien enthalten.

## Claims

1. The use of stabilizers in phosphorus-containing thermally stabilized flame retardant agglomerates for stabilization with respect to discoloration of the same on heating, wherein the stabilizers are compounds of the elements boron, calcium, magnesium, and zinc and the phosphorus-containing thermally stabilized flame retardant agglomerates are compositions which comprise
a) from 60 to 99.89% by weight of aggregates and/or primary particles composed of a phosphinic salt of the formula (I) and/or composed of a diphosphinic salt of the formula (II), and/or composed of polymers thereof, 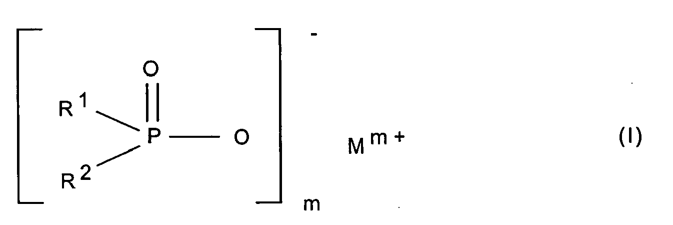 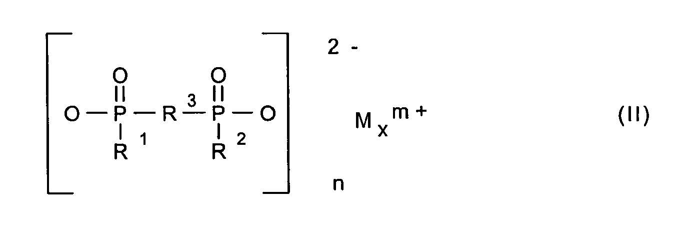 in which
R¹ and R² are identical or different and are C1-C6-alkyl, linear or branched, and/or aryl;
R³ is C₁-C₁₀-alkylene, linear or branched, C₆-C₁₀-arylene, -alkylarylene, or -arylalkylene;
M is Mg, Ca, Al, Zn, Sb, Sn, Ge, Zn, Ti, Fe, Zr, Ce, Bi, Sr, Mn, Li, Na, K, and/or a protonated nitrogen base;
m is from 1 to 4; n is from 1 to 4; x is from 1 to 4,
b) from 0.01 to 20% by weight of binder, where the binder is polyvinyl acetate, polyvinylpyrrolidone, polyvinyl alcohol, polycarboxylate, acrylic acid-maleic acid copolymer, polystyrenesulfonic acid, polystyrenesulfonic acid-maleic anhydride copolymer, water glass, vinyl acetate polymer, polyacrylate/polyacrylic acid, polylactic acid, starch, and cellulose derivatives,
c) from 0.1 to 20% by weight of stabilizer, where the stabilizer is boron phosphate, calcium borate, calcium pyroborate, calcium carbonate, calcium hydroxide, calcium phosphates, calcium hydrogenphosphates, calcium pyrophosphate, magnesium oxide, magnesium hydroxide, magnesium oxide hydroxides, hydrotalcites, dihydrotalcite, magnesium carbonates, magnesium hydroxide carbonates, magnesium calcium carbonates, magnesium phosphates, magnesium hydrogenphosphates, magnesium pyrophosphate and/or magnesium borate, zinc hydroxide, zinc oxide, zinc oxide hydrate; zinc carbonates, zinc hydroxide carbonate, zinc carbonate hydrate, zinc silicate, zinc hexafluorosilicate, zinc hexafluorosilicate hexahydrate, zinc stannate, zinc magnesium aluminum hydroxide carbonate; zinc borate, zinc phosphate, zinc hydrogenphosphate, zinc pyrophosphate; zinc chromate(VI) hydroxide, zinc chromite, zinc molybdate, zinc permanganate, zinc molybdate magnesium silicate; zinc formates, zinc acetates, zinc trifluoroacetates, zinc propionate, zinc butyrate, zinc valerate, zinc caprylate, zinc oleate, zinc stearate, zinc oxalate, zinc tartrate, zinc citrate, zinc benzoate, zinc salicylate, zinc lactate, zinc phenolate, zinc phenolsulfonate, zinc acetylacetonate, zinc tannate, zinc dimethyldithiocarbamate, zinc trifluoromethanesulfonate; zinc phosphides, zinc sulfides, zinc selenides, and zinc tellurides, and moreover at least one synergist, where the L color values according to Hunter (CIE-LAB system) of the phosphorus-containing thermally stabilized flame retardant agglomerates after heat treatment are from 81 to 99.9.

2. The use as claimed in claim 1, wherein the stabilizers are boron phosphate, calcium pyrophosphate, magnesium pyrophosphate, magnesium borate, zinc hydroxide, zinc stearate and/or zinc pyrophosphate.

3. The use as claimed in claim 1 or 2, wherein the a color values of the phosphorus-containing thermally stabilized flame retardant agglomerates are from -2 to +2.

4. The use as claimed in one or more of claims 1 to 3, wherein the b color values of the phosphorus-containing thermally stabilized flame retardant agglomerates are from -2 to +8.

5. The use as claimed in one or more of claims 1 to 4, wherein in the synergist a nitrogen compound, a phosphorus compound, or a phosphorus-nitrogen compound is present.

6. The use as claimed in claim 5, wherein the synergist is melamine pyrophosphate, melamine polyphosphate, melam polyphosphate, melem polyphosphate, melon polyphosphate, melamine cyanurate, melamine, melam, melem and/or melon.

7. The use of stabilizer-containing phosphorus-containing thermally stabilized flame retardant agglomerates as claimed in one or more of claims 1 to 6 in flame-retardant polymer molding compositions and in flame-retardant polymer moldings, flame-retardant polymer films, flame-retardant polymer filaments, and flame-retardant polymer fibers.

8. The use as claimed in claim 7, wherein the flame-retardant polymer molding composition comprises
from 1 to 50% by weight of phosphorus-containing thermally stabilized flame retardant agglomerates as claimed in one or more of claims 1 to 6,
from 1 to 99% by weight of polymer or a mixture of these,
from 0 to 60% by weight of additives,
from 0 to 60% by weight of filler and/or of reinforcing materials.

9. The use as claimed in claim 7, wherein the flame-retardant polymer moldings, flame-retardant polymer films, flame-retardant polymer filaments, and flame-retardant polymer fibers comprise
from 1 to 50% by weight of phosphorus-containing thermally stabilized flame retardant agglomerates as claimed in one or more of claims 1 to 6,
from 1 to 99% by weight of polymer or a mixture of these,
from 0 to 60% by weight of additives,
from 0 to 60% by weight of filler and/or of reinforcing materials.

## Revendications

1. Utilisation de stabilisants dans des agglomérats d'agents ignifuges phosphorés, thermostabilisés, pour la stabilisation vis-à-vis de la coloration lors du chauffage, **caractérisée en ce que** les stabilisants consistent en des composés des éléments bore, calcium, magnésium et zinc, et les agglomérats d'agents ignifuges phosphorés, thermostabilisés, sont des compositions qui contiennent
a) de 60 à 99,89 % en poids d'agrégats et/ou de particules primaires d'un sel d'acide phosphinique de formule (I) et/ou d'un sel d'acide diphosphinique de formule (II) et/ou de leurs polymères 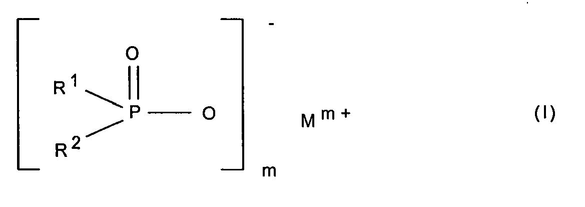 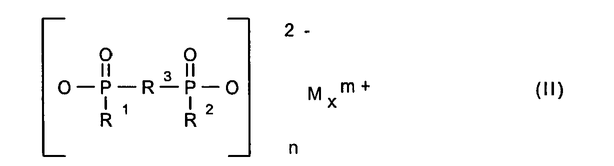 formules dans lesquelles
R¹, R² sont identiques ou différents et représentent un groupe alkyle en C₁-C₆, linéaire ou ramifié et/ou un groupe aryle ;
R³ représente un groupe alkylène en C₁-C₁₀ linéaire ou ramifié, arylène en C₆- C₁₀, alkylarylène en C₆-C₁₀ ou arylalkylène en C₆-C₁₀ ;
M représente Mg, Ca, Al, Zn, Sb, Sn, Ge, Ti, Fe, Zr, Ce, Bi, Sr, Mn, Li, Na, K et/ou une base azotée protonée ;
m va de 1 à 4 ; n va de 1 à 4 ; x va de 1 à 4
b) de 0,01 à 20 % en poids de liant, le liant consistant en, poly(acétate de vinyle), polyvinylpyrrolidone, poly(alcool vinylique), polycarboxylate, copolymère acide acrylique/acide maléique, poly(acide styrènesulfonique), copolymère poly(acide styrènesulfonique)/anhydride maléique, orthosilicate, polymère d'acétate de vinyle, polyacrylate/poly(acide acrylique), poly(acide lactique), amidon et dérivés de cellulose
c) de 0,1 à 20 % en poids de stabilisant, le stabilisant consistant en phosphate de bore, borate de calcium, pyroborate de calcium, carbonate de calcium, hydroxyde de calcium, phosphates de calcium, hydrogénophosphates de calcium, pyrophosphate de calcium, en oxyde de magnésium, hydroxyde de magnésium, oxyde-hydroxydes de magnésium, hydrotalcites, dihydrotalcite, carbonates de magnésium, hydroxyde-carbonates de magnésium, carbonates de magnésium-calcium, phosphates de magnésium, hydrogénophosphates de magnésium, pyrophosphate de magnésium et/ou borate de magnésium, en hydroxyde de zinc, oxyde de zinc, oxyde-hydrate de zinc ; en carbonates de zinc, hydroxyde-carbonate de zinc, carbonate-hydrate de zinc, silicate de zinc, hexafluorosilicate de zinc, hexafluorosilicate-hexahydrate de zinc, stannate de zinc, hydroxyde-carbonate de zinc-magnésium-aluminium ; en borate de zinc, phosphate de zinc, hydrogénophosphate de zinc, pyrophosphate de zinc ; en chromate(VI)-hydroxyde de zinc, chromite de zinc, molybdate de zinc, permanganate de zinc, molybdate de zinc-silicate de magnésium ; en formiates de zinc, acétates de zinc, trifluoroacétates de zinc, propionate de zinc, butyrate de zinc, valérate de zinc, caprylate de zinc, oléate de zinc, stéarate de zinc, oxalate de zinc, tartrate de zinc, citrate de zinc, benzoate de zinc, salicylate de zinc, lactate de zinc, phénolate de zinc, phénolsulfonate de zinc, acétylacétonate de zinc, tannate de zinc, diméthyldithiocarbamate de zinc, trifluorométhanesulfonate de zinc ; et en phosphures de zinc, sulfures de zinc, séléniures de zinc et tellures de zinc, et en outre au moins un agent synergique, et les coordonnées chromatiques selon Hunter (système CIE-LAB) des agglomérats d'agents ignifuges phosphorés, stabilisés, étant de 81 à 99,9 après traitement thermique.

2. Utilisation selon la revendication 1, **caractérisée en ce que** les stabilisants consistent en en phosphate de bore, pyrophosphate de calcium, pyrophosphate de magnésium, borate de magnésium, hydroxyde de zinc, stéarate de zinc et/ou pyrophosphate de zinc.

3. Utilisation selon la revendication 1 ou 2, **caractérisée en ce que** les coordonnées chromatiques a des agglomérats d'agents ignifuges phosphorés, thermostabilisés, vont de -2 à +2.

4. Utilisation selon une ou plusieurs des revendications 1 à 3, **caractérisée en ce que** les coordonnées chromatiques b des agglomérats d'agents ignifuges phosphorés, thermostabilisés, vont de -2 à +8.

5. Utilisation selon une ou plusieurs des revendications 1 à 4, **caractérisée en ce que** l'agent synergique consiste en un tel agent qui contient un composé azoté, phosphoré ou un composé contenant de l'azote et du phosphore.

6. Utilisation selon la revendication 5, **caractérisée en ce que** l'agent synergique consiste en pyrophosphate de mélamine, polyphosphate de mélamine, polyphosphate de melam, polyphosphate de melem, polyphosphate de melon, cyanurate de mélamine, mélamine, melam, melem et/ou melon.

7. Utilisation d'agglomérats d'agents ignifuges phosphorés, thermostabilisés, contenant des stabilisants, selon une ou plusieurs des revendications 1 à 6 dans des matières à mouler en polymère ignifugées et des corps moulés, films, fils et fibres en polymère ignifugés.

8. Utilisation selon la revendication 7, **caractérisée en ce que** la matière à mouler en polymère ignifugée contient
1 à 50 % en poids d'agglomérats d'agents ignifuges phosphorés, thermostabilisés, selon une ou plusieurs des revendications 1 à 6,
1 à 99 % en poids de polymère ou de mélanges de tels polymères
0 à 60 % en poids d'additifs
0 à 60 % en poids de charge et/ou de matières de renfort.

9. Utilisation selon la revendication 7, **caractérisée en ce que** les corps moulés, films, fils et fibres en polymère ignifugés contiennent
1 à 50 % en poids d'agglomérats d'agents ignifuges phosphorés, thermostabilisés, selon une ou plusieurs des revendications 1 à 6,
1 à 99 % en poids de polymère ou de mélanges de tels polymères
0 à 60 % en poids d'additifs
0 à 60 % en poids de charge et/ou de matières de renfort.
